# NEUE EUROPÄISCHE PATENTSCHRIFT

(11) **EP 0 416 354 B2**
(45) Veröffentlichungstag und Bekanntmachung des Hinweises auf die Entscheidung über den Einspruch: **25.10.2000**
(45) Hinweis auf die Patenterteilung: 05.04.1995
(21) Anmeldenummer: 90115860.0
(22) Anmeldetag: 18.08.1990
(51) Int. Cl.: G01N 1/06, F16C 29/04

(54) **Schlitten-Mikrotom**
Traversing microtome
Microtome à coulisseau

(30) Priorität: 23.08.1989 DE 8910071 U
(43) Veröffentlichungstag der Anmeldung: 13.03.1991
(73) Patentinhaber: Microm International GmbH, 69190 Walldorf (DE)
(72) Erfinder: Behme, Werner, D-6908 Wiesloch (DE); Hess, Jürgen, D-6906 Leimen/Gauangelloch (DE)
(74) Vertreter: Gnatzig, Klaus

(56) Entgegenhaltungen:
- EP-A- 0 175 480
- DE-A- 2 911 614
- DE-B- 1 273 917
- DE-C- 3 539 138
- DE-C- 3 714 389
- DE-U- 8 217 319
- DE-U- 8 217 320
- DE-U- 8 910 071
- GB-A- 1 364 577
- US-A- 1 797 694
- ZWF ZEITSCHRIFT FUER WIRTSCHAFTLICHE FERTIGUNG, Band 80, Nr. 9, September 1985, Seiten 128,139,132,134, München, DE; B.E. MEYER: "Koordinatentisch-Baukastensystem für hochpräzise Positionierungen"

## Beschreibung

Bei bekannten Schlitten-Mikrotomen, bei denen die Bewegung des Schlittens mit der Hand erfolgt, wie sie z.B. von der Anmelderin unter der Bezeichnung HM 400 S auf den Markt gebracht werden, erfolgt die Bewegung des Schlittens entlang von Gleitführungen. Diese Bewegung des Schlittens über Gleitführungen erfordert, daß zwischen den Gleitbahnen des Schlittens und den Gleitbahnen des Gehäuses ein möglichst dünner und gleichmäßig dicker Schmiermittelfilm aufrechterhalten wird. Dies ist nur durch Verwendung von sehr teuren Schmierstoffen möglich. Trotz dieser Maßnahme ist es kaum möglich Schnittserien mit Schnitten gleichmäßiger Dicke herzustellen, da die Schnittdicke von der Dicke des Schmierfilmes abhängt und diese von der Viskosität des Schmiermittels und von der Geschwindigkeit der Schlittenbewegung abhängig ist. Die Bedienung eines Schlitten-Mikrotoms der bekannten Bauart erfordert deshalb von der Bedienungsperson viel Erfahrung und Geschicklichkeit, um gute Schnitte herstellen zu können.

Dazuhin ist die Bedienung eines solchen Schlitten-Mikrotoms anstrengend, da die nutzbare Schnittkraft u.a. vom Schlittengewicht abhängt und der Schlitten zur Erreichung eines möglichst hohen Gewichts aus Stahl besteht. Die Bewegung des Schlittens ist deshalb infolge der großen zu bewegenden Masse ermüdend.

Die Herstellung von Schnitten mit bekannten Schlitten-Mikrotomen erfordert eine häufige Reinigung und Schmierung der Gleitflächen. Neben dem dadurch bedingten hohen Verbrauch von teuren Schmiermitteln wird zur Vorbereitung des Schneidvorganges viel Zeit benötigt. Die Dicke und Gleichmäßigkeit der hergestellten Schnitte hängt ganz wesentlich von der Geschicklichkeit, der Erfahrung und der Konzentration der Bedienungsperson ab.

In der EP-O 175 480-A1 ist eine spezielle Ausführung einer sogenannten Kreuzrollenführung beschrieben. Diese Kreuzrollenführungen enthalten zwei am festen Geräteteil und zwei am gegenüber dem festen Geräteteil beweglichen Schlitten angebrachte Profilstäbe mit Führungsnuten. Zwischen zwei sich gegenüberstehenden Profilstäben sind zylindrische Rollen alternierend um 90° verdreht in die Führungsnuten eingesetzt. Als spezielles Anwendungsgebiet der Kreuzrollenführung ist hier die Führung des gegenüber einem Gehäuse beweglichen Objektträgers bei Rotationsmikrotomen mit vertikaler Bewegung sowie bei Mikrotomen mit horizontaler Bewegung genannt.

Es ist nun die Aufgabe der vorliegenden Erfindung ein Schlitten-Mikrotom so auszubilden, daß die Schlittenführung eine hohe Stabilität bei gleichzeitiger Leichtgängigkeit aufweist und so die Herstellung von hochgenauen Schnitten ermöglicht, deren Qualität nicht von der Geschicklichkeit der Bedienungsperson abhängt. Außerdem soll eine relativ ermüdungsarme Bedienung des Schlitten-Mikrotoms möglich sein.

Diese Aufgabe wird durch ein Schlitten-Mikrotom mit den Merkmalen des Anspruchs 1 gelöst.

Das Schlitten-Mikrotom hat zwei mit dem Mikrotom-Gehäuse verbundene, als Profilstäbe mit Führungsnuten ausgebildete, erste Führungselemente, wobei mindestens einer dieser Profilstäbe senkrecht zu seiner Längsachse einstellbar ist, zwei mit dem Schlitten verbundene, als Profilstäbe mit Führungsnuten ausgebildete zweite Führungselemente, wobei sich die Führungsnuten der ersten und zweiten Führungselemente gegenüberstehen und wobei in die Führungsnuten über etwa die halbe Länge der zweiten Führungselemente hochpräzise Rollen spielfrei eingesetzt sind, so daß eine spielfreie, eine hohe Stabilität aufweisende Zwangsführung des Schlittens gebildet ist. Außerdem ist beim erfindungsgemäßen Mikrotom das Schneidmesser am Schlitten befestigt und gegenüber einem mit dem Gehäuse des Mikrotoms verbundenen Objektträger beweglich, sowie der Schlitten aus Leichtmetall gefertigt.

Bei dem Schlitten-Mikrotom nach der Erfindung ist eine Linearführung mit Rollen vorgesehen. Die Linearführung wird durch die ersten und zweiten Führungselemente gebildet, die zusammen eine Führungsnut bilden, in die Rollen aus gehärtetem Stahl spielfrei eingesetzt sind. Da zumindest auch die Laufflächen der Führungsnut aus gehärtetem Stahl bestehen, ergibt sich eine verschleißarme Linearführung hoher Stabilität. Mindestens eines der ersten Führungselemente ist senkrecht zu seiner Längsachse einstellbar so daß sich eine gewisse Vorspannung der Linearführung einstellen und damit Spielfreiheit erreichen läßt.

Die Linearführung weist ein hohes Maß an Leichtgängigkeit bei gleichzeitiger Stäbilitat der Führung auf. Da die Genauigkeit der Führung nicht vom Gewicht des Schlittens abhängt, läßt sich dieser aus Leichtmetall, beispielsweise aus einer Aluminiumlegierung fertigen. Die Leichtgängigkeit der Führung und das geringe Gewicht des zu bewegenden Schlittens ermöglichen eine relativ ermüdungsarme Bedienung des Schlitten-Mikrotoms nach der Erfindung.

Durch die Genauigkeit der Linearführung und deren Spielfreiheit ist erreicht, daß die Genauigkeit der Schnitte nicht von einer örtlich unterschiedlichen Härte des zu schneidenden Präparats abhängt. Versuche haben gezeigt, daß sich mit dem neuen Mikrotom einwandfreie Schnittserien herstellen lassen, und daß sich sogar bei der Verwendung von Kunststoff als Versuchs-Präparat einwandfreie Schnitte ergeben.

Ein wesentlicher Vorteil des Schlitten-Mikrotoms nach der Erfindung liegt darin, daß die Genauigkeit der Schnitte durch das Gerät selbst festgelegt ist und nicht mehr von der Erfahrung und Geschicklichkeit der Bedienungsperson abhängt. Diese wird also einmal durch die Einfachheit der Bedienung entlastet und zudem noch durch die Leichtgängigkeit der Schlittenbewegung.

Weitere zweckmäßige Ausgestaltungen des neuen Schlitten-Mikrotoms sind Gegenstand der Ansprüche 2-9. Anspruch 2 gibt eine vorteilhafte Ausbildung der Führungsnut an, während sich die Ansprüche 3 und 4 auf die Ausbildung der in diese Nut eingesetzten Rollen beziehen. Durch die Maßnahme des Anspruchs 5 wird vermieden, daß Rollen aus den Führungen heraustreten, was störende Stöße verursachen würde. Anspruch 6 gibt eine zweckmäßige und einfache Einstellmöglichkeit für die Vorspannung der Linearführung an.

Die Ansprüche 7 und 8 beziehen sich auf ein bewegtes Abdeckband, das verhindert, daß Schnittreste oder Staub in das Geräteinnere und in die Führungen gelangen.

Die Erfindung wird im folgenden anhand der ein Ausführungsbeispiel darstellenden Figuren 1-3 näher erläutert. Dabei zeigen:
- Figur 1: Eine perspektivische Darstellung eines Schlitten-Mikrotoms nach der Erfindung;
- Figur 2: einen Teilschnitt durch die am Schlitten und am Gehäuse befestigten Führungselemente wobei der Schlitten ohne Messerhalter dargestellt ist;
- Figur 3: eine teilweise geschnittene Draufsicht auf die Führungsbahn des Mikrotoms nach Figur 1.

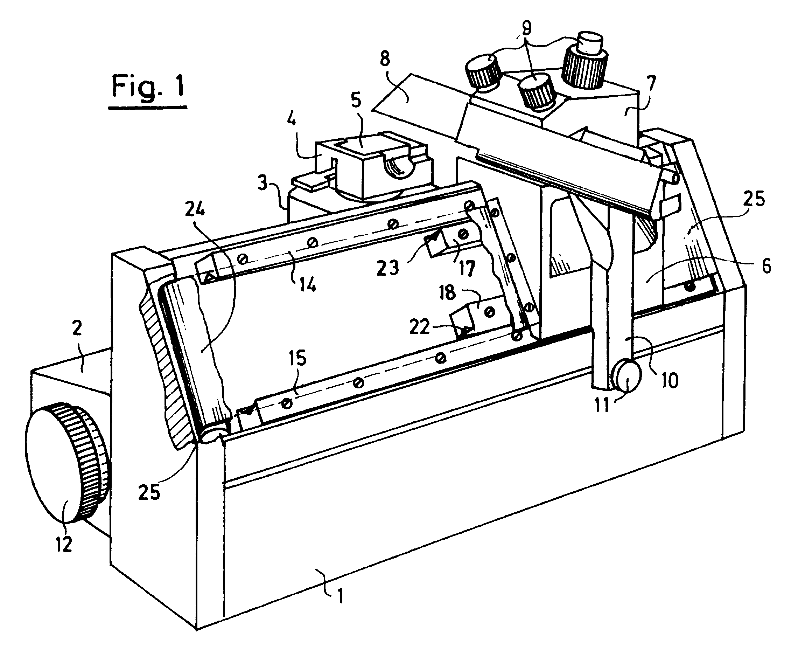

In Figur 1 ist mit (1) das Gehäuse eines Schlitten-Mikrotoms bezeichnet. Dieses Gehäuse weist einen Teil (2) auf, auf dem ein vertikal geführtes Trägersystem (3) montiert ist. Auf diesem ist die Objekthalterung (4) befestigt, welche das zu schneidende Objekt (5), beispielsweise ein in Paraffin eingebettetes Präparat trägt.

Auf dem Gehäuse (1) ist der Schlitten (6) horizontal verschiebbar gelagert, auf dem der Messerhalter (7) befestigt ist. In diesen ist das Schneidmesser (8) eingesetzt. Der Messerhalter (7) hat mehrere Freiheitsgrade und ermöglicht es mit Hilfe der Einstellglieder (9) das Messer (8) optimal einzustellen.

Nach Einstellung des Messers (8) legt dessen Schnittkante die Schnittebene fest. Bei der anschließenden Horizontalverschiebung des Schlitten (6) wird das Schneidmesser in der Schnittebene über das zu schneidende Objekt (5) bewegt.

Das Objekt (5) wird mit Einstellgliedern, die hier nicht dargestellt sind, die aber in der DE-PS 37 14 390 beispielsweise beschrieben sind in der gewünschten Stellung positioniert.

Am Schlitten (6) ist ein Hebel (10) befestigt, der über einen mit dem Knopf (11) einstellbaren Nocken auf das System einwirkt, das eine Vertikalbewegung des Trägers (3) und damit des Objektes (5) auslöst. Der Nocken ist positionierbar, so daß zu einem vorgewählten Hub des Schlittens (6) der Schaltpunkt der sogenannten Zustellautomatik einstellbar ist. Diese Zustellautomatik bewirkt eine Vertikalbewegung des Trägers (3) und ist beispielsweise in der DE-PS 38 06 269 beschrieben. Bei Einleitung der Bewegung des Schlittens (6) wird das Objekt (5) mittels des Trägers (3) um ein Intervall vertikal verschoben, das der mit dem Knopf (12) vorgewählten Schnittdicke entspricht. Das Messer (8) wird dann über das Objekt bewegt und der Objektschnitt wird hergestellt.

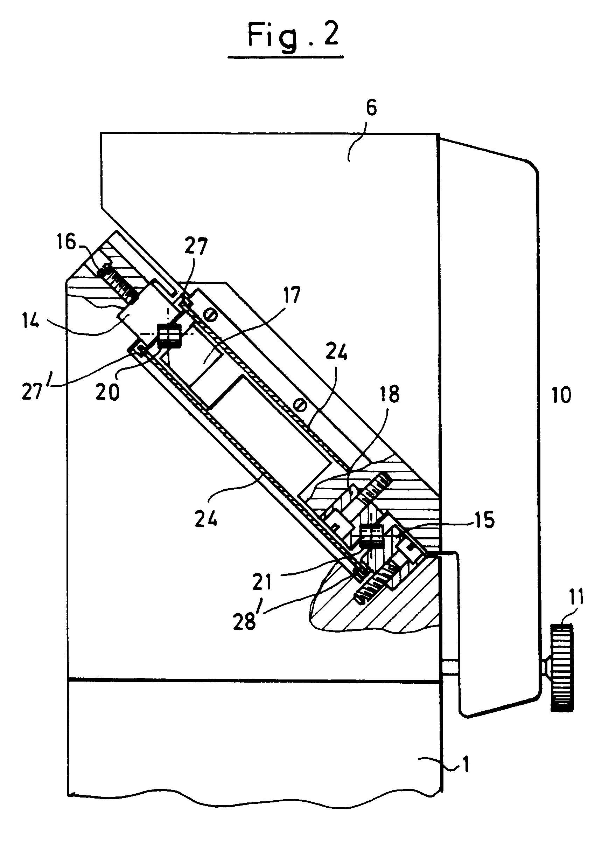

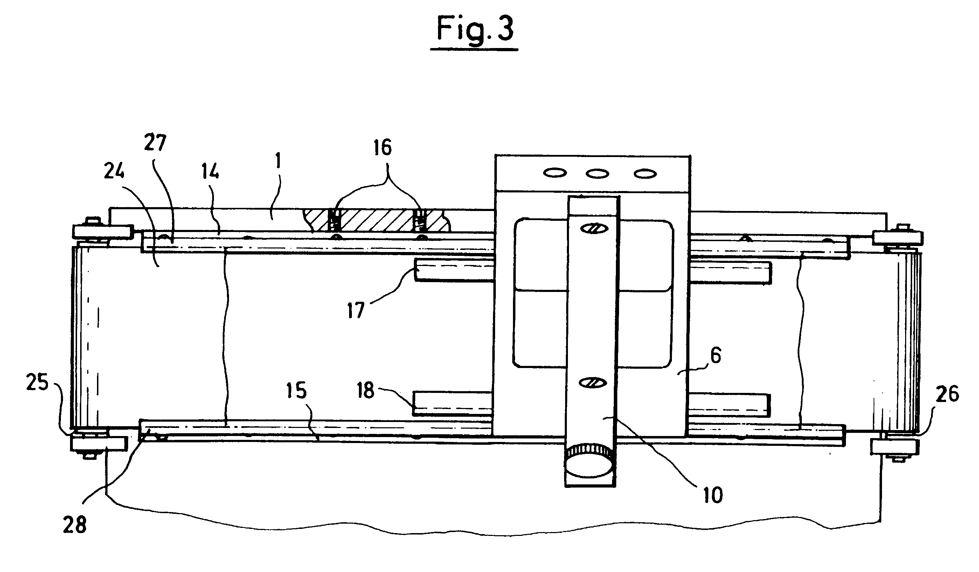

Mit dem Mikrotom-Gehäuse (1) sind zwei Führungselemente (14, 15) fest verbunden, beispielsweise verschraubt. Jedes Führungselement wird von einem Profilstab gebildet, der eine Führungsnut aufweist, die hier als V-Nut ausgebildet ist. Wie die Figuren 2 und 3 zeigen ist der obere Profilstab (14) senkrecht zu seiner Längsachse einstellbar. Zu dieser Einstellung sind mehrere Druckschrauben (16) vorgesehen.

Mit dem Schlitten (6) sind zwei weitere Führungselemente (17, 18) fest verbunden, die ebenfalls von Profilstäben mit einer Führungsnut gebildet werden. Diese Nut ist als V-Nut ausgebildet.

Die einander gegenüberliegenden Führungselemente (14, 17) und (15, 18) bilden zwischen sich eine Führungsnut, in die Rollen (20, 21) eingesetzt sind. Es sind mehrere Rollen vorgesehen, die alternierend um 90° versetzt in die Führungsnuten eingesetzt sind. Dies ist durch die Achs-Angaben in Figur 2 angedeutet. Die Rollen sind in hier nicht dargestellten Rollenkäfigen gefaßt, die beispielsweise aus Kunststoff bestehen. Die Rollen selbst bestehen aus gehärtetem Stahl.

In einem ausgeführten Beispiel sind die Führungselemente (14, 15) 350 mm lang, die Führungselemente (17, 18) haben eine Länge von 200 mm und die in die Führungsnuten eingesetzten Rollenkäfige haben eine Länge von jeweils ca. 100 mm. Damit läßt sich ein maximaler Hub des Schlittens (6) von 200 mm erreichen.

Die verwendeten Linearführungen sind vorzugsweise aus handelsüblichen Teilen hergestellt, wie sie beispielsweise von der Firma Schneeberger unter der Bezeichnung RNG angeboten werden. Diese Linearführungen bestehen aus gehärteten Teilen und sind sehr verschleißarm. Sie werden im allgemeinen als Kreuzrollen-Linearführungen bezeichnet.

Die Einstellbarkeit des Profilstabes (14) mittels der Druckschrauben (16) macht es möglich den Linearführungen eine gewisse Vorspannung zu geben, so daß die lineare Zwangsführung des Schlitten (6) spielfrei ist und eine hohe Stabilität aufweist.

Der Schlitten (6) ist bei dem Schlitten-Mikrotom nach der Erfindung aus Leichtmetall, da das Schlittengewicht nicht die nutzbare Schnittkraft beeinflußt. Es ist dabei vorteilhaft den Schlitten (6) aus einer Aluminiumlegierung herzustellen.

Die beiden mit dem Schlitten (6) verbundenen Führungselemente (17) und (18) sind an ihren Enden mit Anschlagen (22, 23) versehen, die verhindern, daß die lose eingesetzten Rollenkäfige aus den Führungen heraustreten. Damit sind Einlauf-Stöße vermieden, die enstehen würden, wenn bei der Schlittenbewegung alle Teile der Rollenkäfige wieder in die Führungen einlaufen würden.

Die von den Elementen (14, 17) und (15, 18) gebildeten Führungsnuten sind mittels eines Abdeckbandes (24) vor dem Eindringen von Staub oder von Schnittresten geschützt. Dieses Band ist beidseitig am Schlitten (6) befestigt, beispielsweise in der in Figur 2 angedeuteten Art mittels Klemmleisten. Vom Schlitten (6) verläuft das Abdeckband über die Führungen (14-18) zu Umlenkrollen (25, 26) die leicht drehbar im Gehäuse (1) gelagert sind. Von den Umlenkrollen verläuft das Band (24) auf der Rückseite der Führungen (14-18) zurück, d. h. es ist als Endlos-Band ausgebildet, das eine geschlossene Schlaufe bildet und das bei der Bewegung des Schlitten (6) mitläuft.

Es ist zweckmäßig das Band (24) auf der Oberseite der Führungen (14-18) seitlich staubdicht zu führen. Dazu sind die aus Figur 2 ersichtlichen Dichtungen (27, 27′) und (28, 28′) vorgesehen, in denen das Abdeckband läuft.

Das Abdeckband (24) besteht beispielsweise aus einem Polyester-Gewebe mit glatter Kunststoffbeschichtung. Diese Beschichtung ist so gewählt, daß ihr Material gegen Schnittmittelreste und die gebräuchlichsten Reinigungsmittel resistent ist.

## Patentansprüche

1. Schlitten-Mikrotom, bei dem ein das Schneidmesser tragender Schlitten entlang präziser Führungselemente gegenüber einem, mit dem Gehäuse des Mikrotoms verbundenen Objektträger bewegbar ist; mit dem Mikrotom-Gehäuse (1) zwei als Profilstäbe mit Führungsnuten ausgebildete erste Führungselemente (14, 15) verbunden sind, mindestens einer dieser Profilstäbe (14) senkrecht zu seiner Längsachse einstellbar ist, mit dem Schlitten (6) zwei als Profilstäbe mit Führungsnuten ausgebildete zweite Führungselemente (17, 18) fest verbunden sind, wobei sich die Führungsnuten der ersten (14, 15) und zweiten (17, 18) Führungselemente gegenüberstehen, in die Führungsnuten über etwa die halbe Länge der zweiten Führungselemente (17, 18) hochpräzise Rollen (20, 21) spielfrei eingesetzt sind, so daß eine spielfreie, eine hohe Stabilität aufweisende Zwangsführung des Schlittens (6) gebildet ist, und bei dem der Schlitten (6) aus Leichtmetall gefertigt ist.

2. Schlitten-Mikrotom nach Anspruch 1, dadurch gekennzeichnet, daß die Führungsnuten als V-Nuten ausgebildet sind, und daß zumindest ihre Führungsflächen aus gehärtetem Stahl bestehen.

3. Schlitten-Mikrotom nach Anspruch 1 und 2, dadurch gekennzeichnet, daß die Rollen (20, 21) alternierend um 90° versetzt in die V-Nuten eingesetzt sind.

4. Schlitten-Mikrotom nach Anspruch 3, dadurch gekennzeichnet, daß die Rollen (20, 21) in Rollenkäfigen gefaßt sind und aus gehärtetem Stahl bestehen.

5. Schlitten-Mikrotom nach Anspruch 1-4, dadurch gekennzeichnet, daß die zweiten Führungselemente (17, 18) jeweils an ihren Enden mit Anschlägen (22, 23) für die Käfige der Rollen (20, 21) versehen sind.

6. Schlitten-Mikrotom nach Anspruch 1, dadurch gekennzeichnet, daß zur Verstellung von mindestens einem der ersten Führungselemente (14) senkrecht zur Längsachse wirkende Druckschrauben (16) vorgesehen sind.

7. Schlitten-Mikrotom nach Anspruch 1 und einem oder mehreren der folgenden, dadurch gekennzeichnet, daß über die Führungselemente (14-18) ein, am Schlitten (6) befestigtes Abdeckband (24) geführt ist, und daß an den Enden der Führungselemente (14-18) Umlenkrollen (25, 26) für das Band vorgesehen sind.

8. Schlitten-Mikrotom nach Anspruch 7, dadurch gekennzeichnet, daß das Abdeckband (24) als Endlos-Band ausgebildet ist.

9. Schlitten-Mikrotom nach Anspruch 8, dadurch gekennzeichnet, daß das Abdeckband (24) seitlich staubdicht geführt ist.

## Claims

1. Traversing microtome, in which a carriage which supports the cutting blade can move along precise guide elements with respect to a specimen slide which is connected to the housing of the microtome, two first guide elements (14, 15), which are designed as profiled bars with guide grooves, are connected to the microtome housing (1), at least one of these profiled bars (14) is adjustable perpendicular to its longitudinal axis, two second guide elements (17, 18), which are designed as profiled bars with guide grooves, are fixedly connected to the carriage (6), the guide grooves of the first guide elements (14, 15) and of the second guide elements (17, 18) being opposite one another, high-precision rollers (20, 21) being fitted into the guide grooves without play over approximately half the length of the second guide elements (17, 18), so that play-free forced guidance, which is exhibits a high level of stability, of the carriage (6) is formed, and in which the carriage (6) is made from lightweight metal.

2. Traversing microtome according to Claim 1, characterized in that the guide grooves are designed as V-shaped grooves, and in that at least their guide surfaces consist of hardened steel.

3. Traversing microtome according to Claims 1 and 2, characterized in that the rollers (20, 21) are fitted into the V-shaped grooves with an alternating offset of 90°.

4. Traversing microtome according to Claim 3, characterized in that the rollers (20, 21) are mounted in roller cages and consist of hardened steel.

5. Traversing microtome according to Claims 1-4, characterized in that the second guide elements (17, 18) are each provided at their ends with stops (22, 23) for the cages of the rollers (20, 21).

6. Traversing microtome according to Claim 1, characterized in that pressure screws (16) which act perpendicular to the longitudinal axis are provided for the purpose of adjusting at least one of the first guide elements (14).

7. Traversing microtome according to Claim 1 and one or more of the following claims, characterized in that a cover belt (24) fixed to the carriage (6) is guided over the guide elements (14-18), and in that deflection sheaves (25, 26) for the belt are provided at the ends of the guide elements (14-18).

8. Traversing microtome according to Claim 7, characterized in that the cover belt (24) is designed as an endless belt.

9. Traversing microtome according to Claim 8, characterized in that the cover belt (24) is laterally guided in a dust-tight manner.

## Revendications

1. Microtome à chariot équipé d'un chariot en métal léger portant la lame coupante et pouvant être déplacé le long d'éléments de guidage précis par rapport à un porte-objet solidaire du boîtier du microtome, d'une première paire d'éléments de guidage (14, 15) qui se présentent sous forme de bâtons profilés dotés de rainures de guidage et qui sont reliés au boîtier (1) du microtome, l'un desdits bâtons (14) au moins étant réglable dans un sens perpendiculaire à son axe longitudinal, d'une seconde paire d'éléments de guidage (17, 18) qui se présentent sous forme de bâtons profilés dotés de rainures de guidage et qui sont reliés fixement au chariot (6), les rainures de guidage des premiers (14, 15) et des seconds (17, 18) éléments de guidage se faisant face, et de rouleaux de haute précision (20, 21) encastrés sans jeu entre les rainures de guidage sur la moitié environ de la longueur des seconds éléments de guidage (17, 18), de sorte que l'on obtienne un guidage forcé du chariot (6) sans jeu et extrêmement stable.

2. Microtome à chariot selon la revendication 1, caractérisé en ce que les rainures de guidage sont des rainures en forme de V dont les surfaces de guidage au moins sont en acier trempé.

3. Microtome à chariot selon les revendications 1 et 2, caractérisé en ce que les rouleaux (20, 21) encastrés entre les rainures en V présentent en alternance un décalage de 90°.

4. Microtome à chariot selon la revendication 3, caractérisé en ce que les rouleaux (20, 21) sont sertis dans des cages de rouleaux et fabriqués en acier trempé.

5. Microtome à chariot selon les revendications 1 à 4, caractérisé en ce que les seconds éléments de guidage (17, 18) sont munis respectivement à leurs extrémités de butées (22, 23) qui limitent la course des cages des rouleaux (20, 21).

6. Microtome à chariot selon la revendication 1, caractérisé en ce que des vis de pression (16) sont prévues pour le réglage d'au moins un des premiers éléments de guidage (14) dans un sens perpendiculaire à l'axe longitudinal.

7. Microtome à chariot selon la revendication 1 et l'une ou plusieurs des revendications suivantes, caractérisé en ce qu'une bande de recouvrement (24) fixée sur le chariot (6) est aménagée au-dessus des éléments de guidage (14 à 18) et que des poulies (25, 26) de renvoi de ladite bande sont prévues aux extrémités desdits éléments de guidage (14 à 18).

8. Microtome à chariot selon la revendication 7, caractérisé en ce que la bande de recouvrement (24) est une bande sans fin.

9. Microtome à chariot selon la revendication 8, caractérisé en ce que la bande de recouvrement (24) est guidée latéralement de façon à assurer l'étanchéité à la poussière.
